# EUROPÄISCHE PATENTSCHRIFT

(11) **EP 1 853 117 B1**
(45) Veröffentlichungstag und Bekanntmachung des Hinweises auf die Patenterteilung: **23.03.2011**
(21) Anmeldenummer: 06724870.8
(22) Anmeldetag: 23.02.2006
(51) Int. Cl.: A21C 3/08

(54) **VERFAHREN ZUR HERSTELLUNG VON GESCHLUNGENEN TEIGROHLINGEN AUS TEIGSTRÄNGEN SOWIE VORRICHTUNG ZUR MASCHINELLEN HERSTELLUNG VON GESCHLUNGENEN TEIGWAREN**
METHOD FOR PRODUCING KNOTTED DOUGH PREFORMS FROM DOUGH STRANDS AND DEVICE FOR THE AUTOMATED PRODUCTION OF KNOTTED DOUGH PRODUCTS
PROCEDE POUR PRODUIRE DES EBAUCHES DE PATES ENROULEES A PARTIR DE BANDES DE PATES ET DISPOSITIF DESTINE A PRODUIRE MECANIQUEMENT LES PRODUITS EN PATE ENROULEE

(30) Priorität: 25.02.2005 EP 05101449
(43) Veröffentlichungstag der Anmeldung: 14.11.2007
(73) Patentinhaber: Fritsch GmbH, 97348 Markt Einersheim (DE)
(72) Erfinder: BERNHARDT, Udo, 97346 Iphofen (DE)
(74) Vertreter: Götz, Georg Alois
(86) Internationale Anmeldenummer: PCT/EP2006/060210
(87) Internationale Veröffentlichungsnummer: WO 2006/089928

(56) Entgegenhaltungen:
- EP-A- 0 938 844
- EP-A- 1 255 441
- DE-A1- 1 432 965
- DE-A1- 19 717 323
- DE-C- 571 517
- DE-U1- 29 714 117
- US-A- 2 057 772

## Beschreibung

Die Erfindung betrifft ein Verfahren zur Herstellung von geschlungenen Teigrohlingen aus Teigsträngen, insbesondere von Brezelrohlingen, sowie eine Vorrichtung zur maschinellen Herstellung von geschlungenen Teigwaren, insbesondere Brezeln.

Die maschinelle Herstellung von ehemals handwerklich produzierten Teigwaren ist in der Backindustrie etabliert. Insbesondere die maschinelle Herstellung von geschlungenen Teigwaren wurde in den letzten Jahren deutlich verbessert und ist immer noch Ziel der Entwicklungen der Maschinenhersteller.

Die Druckschrift EP1255441B1 beschreibt ein Brezelherstellungssystem und ein Verfahren zur Herstellung von geschlungenen Telgrohlingen aus Teigsträngen. Bei dem offenbarten Verfahren werden die Teigstränge an den Teigstrangenden von einem Schlingkopf aufgenommen. Durch Rotieren des Schlingkopfes werden die Teigstrangschenkel des Teigstrangs miteinander verschlungen. Vor dem eigentlichen Schlingvorgang werden von der Seite her, also quer zur Förderrichtung, Knoten-Schling-Führungselemente eingefahren, die zusammen einen Führungsring bilden, der die Teigstrangschenkel vollständig umschließt.
Die DE 197 17 323 A1 offenbart eine Brezelschlingmaschlne mit Bändern, die als Schlingführungseinrichtung mitlaufend zu einem Teigstrang, der mit herabhängenden Enden auf einem Förderband in eine Transportrichtung bewegt wird, ausgebildet sind und einer darunter liegenden Schlingeinrichtung zur Ausbildung eines Brezelknotens im Teigstrang. Die Enden des Teigstrangs bleiben während des Schlingvorgangs frei, so dass insbesondere keine Teigstrangdehnung durchgeführt werden kann.

Der Erfindung liegt die Aufgabe zugrunde, ein Verfahren sowie eine Vorrichtung der eingangs genannten Art vorzuschlagen, mit denen eine schonender Teigbearbeitung und eine höhere Produktionszuverlässigkeit erreicht werden kann.

Die Aufgabe wird gelöst durch ein Verfahren gemäß dem Anspruch 1 sowie einer Vorrichtung gemäß Anspruch 11.

Bei dem Verfahren gemäß Anspruch 1 ist vorgesehen, dass ein Teigstrang an den Teigstrangenden von einem Schlingkopf aufgenommen wird, die Teigstrangschenkel des Teigstranges miteinander verschlungen werden und die Teigstrangschenkel während des Verschlingens mittels einer Schlingführungseinrichtung geführt werden. Weiterhin Ist vorgesehen, dass die Schlingführungseinrichtung mit dem Schlingkopf mitlaufend verfahren, insbesondere nachgeführt wird und dabei unmittelbar nach Aufnahme der Teigstrangenden und/oder einem Dehnen des Teigstrangs mit dem Schlingkopf entgegen einer Teigstrang-Fördereinrichtung bewegt wird.

Mit dem erfindungsgemäßen Verfahren bzw. der erfindungsgemäßen Vorrichtung können geschlungene Teigwaren, insbesondere Brezeln jedoch auch Zöpfe, Laugenknoten oder andere Teigwaren, die einen geschlungenen Abschnitt, insbesondere einen geschlungenen Mittelabschnitt aufweisen, hergestellt werden.

Die mitlaufende Verfahrbewegung der Schlingführungseinrichtung kann während des gesamten Schlingvorgangs erfolgen, vorzugsweise jedoch nur während der ersten halben oder dreiviertel Drehung des Schlingkopfs. Die Verfahrbewegung bzw. die Nachführbewegung kann mit der gleichen Geschwindigkeit wie die Bewegungsgeschwindigkeit des Schlingkopfs erfolgen, kann jedoch auch schneller oder langsamer sein. Insbesondere kann die Schlingführungseinrichtung dem Schlingkopf vorauslaufen oder nachlaufen.

Durch die parallele Bewegung von Schlingführungseinrichtung und Schlingkopf wird erreicht, dass die Belastung durch Reibung an der Schlingführungseinrichtung auf die Teigstrangschenkel des Teigstrangs wesentlich vermindert wird und somit ein Reißen des Teigstranges vermieden und gleichzeitig die Schlinggeschwindigkeit erhöht werden kann. Dies führt zu einer erhöhten Produktivität des Verfahrens bzw. der Vorrichtung im Vergleich zu den Verfahren bzw. Vorrichtungen, die aus dem Stand der Technik bekannt sind.

Weiter werden mit der Erfindung die Vorteile erzielt, dass der Teigstrang während des Schlingvorganges auf Spannung gehalten wird, und dabei ein etwa zu bildender Schlingknoten an der richtigen Stelle entsteht und straff gechlossen wird

Optionale oder vorteilhafte Ausgestaltungen oder Abänderungen ergeben sich ganz oder teilweise aus den abhängigen Ansprüchen und/oder der nachfolgenden Beschreibung.

Insbesondere kann vorgesehen sein, dass die Schlingführungseinrichtung während der mitlaufenden Verfahrbewegung in Richtung Teigstrangmittelteil verfahren wird. Bei abgewandelten Ausführungsformen des Verfahrens kann auch vorgesehen sein, dass die Schlingführungseinrichtung z.B. während eines Dehnschritts, bei dem die Teigstrangschenkel um eine definierte Länge in Längserstreckung gedehnt werden, von dem Telgstrangmittelteil weggefahren wird.

Vorzugsweise wird In einem ersten Schritt die Schlingführungseinrichtung zugeschaltet. Dies kann realisiert sein, indem zwei Führungsteile, die die Schlingführungseinrichtung bilden, quer zu einer Förderrichtung des Teigstrangs bewegt werden, so dass diese eine gemeinsame Führungsfläche für die Teigstrangschenkel bilden. Die Formgebung der Führungsfläche ist dabei frei, insbesondere können auch Führungsringe, wie sie aus dem Stand der Technik bekannt sind, gebildet werden. Vorzugsweise weisen die Führungsteile jedoch jeweils eine Führungsbahn auf, die seitlich an den Teigstrangschenkeln zur Anlage kommt, so dass die Teigstrangschenkel beidseitig geführt werden.

Bei einer bevorzugten Ausführungsform des erfindungsgemäßen Verfahrens ist vorgesehen, dass die Zuschaltung und/oder die mitlaufende Verfahrbewegung und/oder der Schlingschritt als überlagerte Bewegung ausgeführt werden.

Die Aufgabe wird ferner durch eine Vorrichtung gemäß Anspruch 140 gelöst. Es handelt sich dabei um eine Vorrichtung zur maschinellen Herstellung von geschlungenen Teigwaren, insbesondere Brezeln, aus einem Teigstrang, vorzugsweise zur Durchführung des Verfahrens nach einem der Ansprüche 1 bis 8.

Die erfindungsgemäße Vorrichtung weist einen Formtisch mit einem Formwerkzeug zur Aufnahme bzw. zur Anlage des Teigstrangmittelteils des Teigstrangs auf. Zum Ergreifen der Teigstrangenden und zum Schlingen der Teigstrangschenkel ist ein Schlingkopf vorgesehen, der vorzugsweise durch einen Stellantrieb bewegt wird. Die Vorrichtung umfasst ferner eine Schlingführungseinrichtung mit Führungsflächen, wobei die Führungsflächen gemeinsam die Teigstrangschenkel während des Schlingens führen. Die Schlingführungseinrichtung kann also aus mehreren Führungsteilen aufgebaut sein, wobei jedes Führungsteil eine Führungsfläche aufweist und die Gesamtheit der Führungsflächen gemeinsam die Teigstrangschenkel führen. Die Führungsflächen sind in Richtung des Formwerkzeugs verfahrbar ausgebildet und zwar insbesondere derart, dass die Verfahrbewegung aller Führungsflächen gleichorientiert ist, also im wesentlichen in die gleiche Richtung erfolgt.

Bei einer bevorzugten Ausführungsform weist die Schlingführungseinrichtung insbesondere zwei Führungsteile mit Führungsflächen auf, wobei die Führungsteile jeweils in Richtung des Formwerkzeugs bzw. in Gegenrichtung - und senkrecht dazu verfahrbar sind. Die Führungsteile sind bei dieser Ausführungsform also frei in einer Ebene, die insbesondere parallel zu der Auflagefläche auf dem Formtisch ausgebildet ist, verfahrbar.

Bei einer Weiterbildung dieser Ausführungsform ist vorgesehen, dass die möglichen Bewegungen der Führungsteile in Richtung des Formwerkzeugs und senkrecht dazu durch eine mechanische und/oder steuerungstechnische Kopplung derart begrenzt ist, dass die Führungsteile nur auf definierten Trajektorien in einer Ebene, die vorzugsweise parallel zu der Auflagefläche auf dem Formtisch ausgebildet ist, verfahrbar sind. Insbesondere kann es sich bei den Trajektorien um halbkreisförmige Bewegungsbahnen handeln.

Vorzugsweise kann vorgesehen sein, dass die Führungsteile über ein Hebelsystem verfahrbar sind, welches insbesondere eine Zwangsführung für die Führungsteile entlang der oben-genannten Trajektorien bildet. Bei einer vorteilhaften Ausgestaltung der Vorrichtung ist vorgesehen, dass die Führungsteile ohne Drehung, nur parallel verfahrbar sind. Vorzugsweise ist das Hebelsystem und/oder ein Stellantrieb für die Führungsteile über mindestens einen Druckzylinder und/oder mindestes einen Motor antreibbar.

Weitere Merkmale, Einzelheiten, Vorteile, Kombinationen und Wirkungen auf der Basis der Erfindung sind aus dem nachfolgenden Ausführungsbeispiel zu entnehmen. Es zeigen:
- Figuren 1,1a: eine schematische Draufsicht bzw. Seitenansicht eines Ausführungsbeispiels einer Brezelschlingvorrichtung während bzw. kurz nach dem Greifen und Dehnen der Teigstrangenden (Dehnstellung);
- Figuren 2,2a: eine schematische Draufsicht bzw. Seitenansicht der Brezelschlingvorrichtung in Figur 1 in einer Vorphase des Schlingens, wobei die Greifer nach innen geschwenkt sind;
- Figuren 3,3a: eine schematische Draufsicht bzw. Seitenansicht der Brezelschlingvorrichtung in Figur 1 während des Schlingens, wobei der Schlingkopf eine Drehung um 90° durchgeführt hat;
- Figuren 4,4a: eine schematische Draufsicht bzw. Seitenansicht der Brezelschlingvorrichtung in Figur 1 während des Schlingens, wobei der Schlingkopf eine Drehung um 270° durchgeführt hat;
- Figuren 5,5a: eine schematische Draufsicht bzw. Seitenansicht der Brezelschlingvorrichtung in Figur 1 während der Ablage der Teigstrangenden auf dem Teigstrangmittelteil
- Figur 6: eine schematische Draufsicht eines abgewandelten Ausführungsbeispiels in einer Figur 4 entsprechenden Stellung bzw. Schlingposition

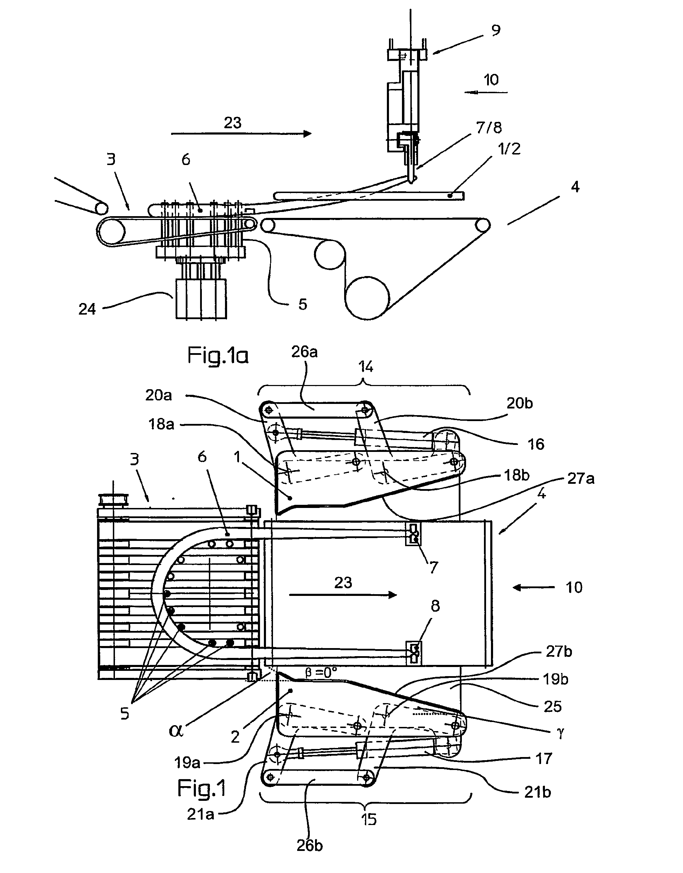

Die Figur 1 zeigt in Draufsicht ein Ausführungsbeispiel einer Brezelschlingvorrichtung 10. Die Brezelschlingvorrichtung 10 umfasst einen Formtisch 3, einen Zwischentisch 4, einen Schlingkopf 9 sowie eine automatisierte Vorrichtung zum Führen der Teigstrangschenkel.

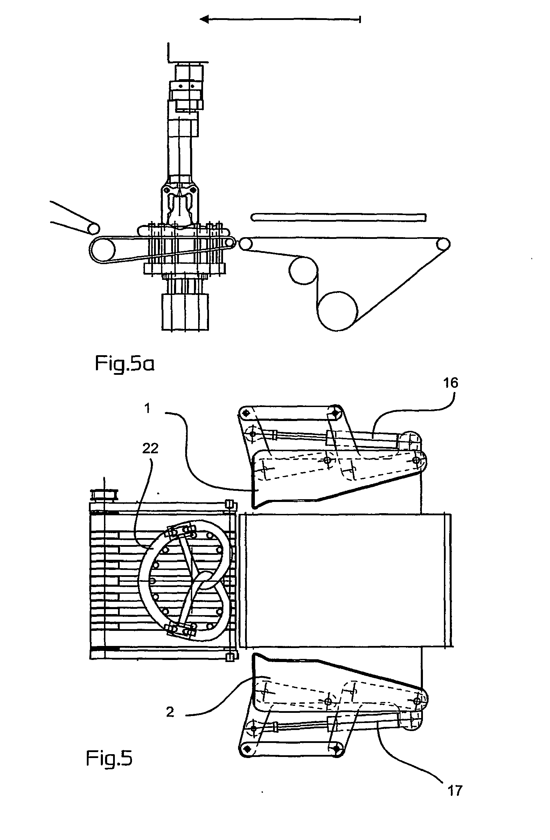

Der Formtisch 3 ist als Förderband für den Antransport eines U-förmig gebogenen Teigstrangs 6 zur Schlingposition sowie zum Abtransport der geschlungenen Brezel 22 (Figur 5) ausgebildet. Hierzu umfasst der Formtisch 3 zwei waagerecht und parallel zueinander angeordnete Umlenkrollen zur Umlenkung einer Mehrzahl von schmalen und breiten Förderriemen, die parallel zu einer Förderrichtung 23, die in Figur 1 von links nach rechts verläuft, angeordnet sind und zur Auflage und zum Transport des U-förmig gebogenen Teigstrangs 6 bzw. der fertigen Brezel 22 dienen. Die schmalen und breiten Förderriemen sind parallel zueinander angeordnet, wobei zwischen den Förderriemen jeweils ein Spalt vorgesehen ist. Die schmalen Förderriemen befinden sich in einem mittleren Bereich des Formtisches 3, der von zwei breiten Förderriemen im Randbereich begrenzt ist. Der Bereich der schmalen Förderriemen ist senkrecht zur Förderrichtung so breit ausgeführt, dass das Teigstrangmittelteil des U-förmig gebogenen Teigstrangs 6 aufgelegt werden kann, während die Teigstrangschenkel auf den breiten, seitlich angeordneten Förderriemen aufliegen.

Figur 1 a zeigt eine Seitenansicht der Brezelschlingvorrichtung in Figur 1. Unterhalb des Formtisches 3 ist ein Brezelformwerkzeug 5 angeordnet, welches durch eine Mehrzahl von vertikal ausgerichteten und in Draufsicht halbkreisförmig angeordneten Haltestiften gebildet wird. Die Haltestifte des Brezelformwerkzeugs 5 sind in den Spalten zwischen den Förderbändern angeordnet, so dass sie den Formtisch 3 durchgreifen. Das Brezelformwerkzeug 5 ist mittels eines Hubzylinders 24 in vertikaler Richtung verschiebbar ausgebildet, so dass das Brezelformwerkzeug 5 in vertikaler Richtung zwischen zwei Positionen bewegt werden kann. In der ersten, oberen Position, die in Figur 1a dargestellt ist, ist der Hubzylinder 24 ausgefahren, so dass die Haltestifte des Brezelformwerkzeugs 5 über die Oberseite der Förderriemen herausragen und einen Anschlag für den Teigstrang 6 bilden. In der zweiten, unteren Position (nicht dargestellt) ist der Hubzylinder 24 eingefahren, so dass die Haltestifte des Brezelformwerkzeugs 5 im Formtisch 3 versenkt sind.

Dem Formtisch 3 ist in Förderrichtung 23 ein Zwischentisch 4 unmittelbar nachgeschaltet. Der Zwischentisch 4 umfasst ein breites Förderband, dessen Breite der Gesamtbreite der schmalen und breiten Förderriemen des Formtisches 3 entspricht und den Transport des Teigstrangs 6 bzw. der Brezel 22 geradlinig in Förderrichtung 23 weiterführt. Die Transportrichtung der schmalen und breiten Förderriemen des Formtisches 3 sowie des Förderbands des Zwischentischs 4 ist somit gleichgerichtet die Förderrichtung 23.

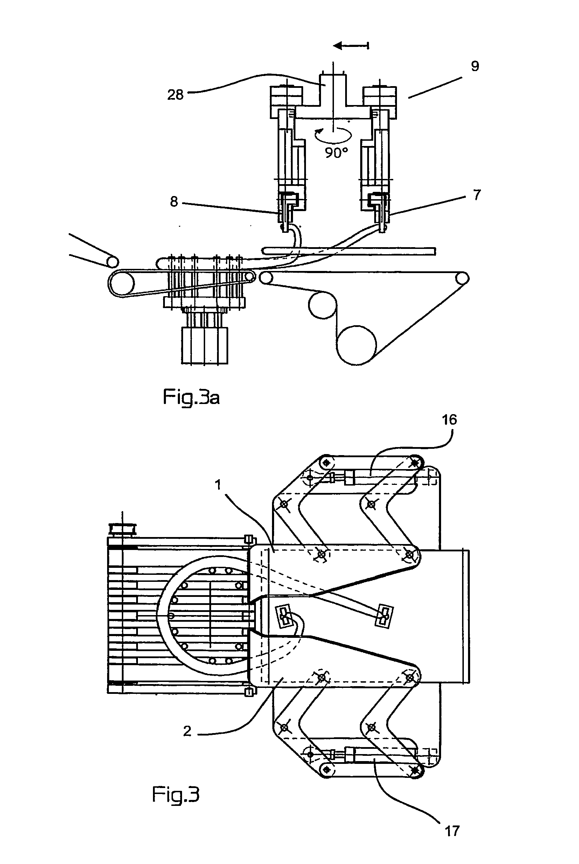

Wie am besten aus den Figuren 1a und 3a erkennbar ist, ist oberhalb des Zwischentischs 4 bzw. des Formtischs 3 ein Schlingkopf 9 angeordnet. Der Schlingkopf 9 umfasst - wie z. B. in Figur 3a zu sehen - am oberen Ende ein Joch 28, welches in der Seitenansicht der Figur 3a einen umgedreht T-förmigen Querschnitt aufweist. Der Mittelschenkel des im Querschnitt T-förmigen Jochs bildet die Drehachse, um die der Schlingkopf 9 mittels eines nicht dargestellten Drehantriebs rotiert werden kann. An den beiden freien Enden des Jochs sind Greifeinrichtungen 7 bzw. 8 angeordnet. Die Greifeinrichtung 7 bzw. 8 umfasst jeweils ein Paar Greiferfinger zum Ergreifen und Halten der Teigstrangenden, wobei jedes Paar Greiferfinger exzentrisch auf einem Schwenkantrieb mit einer vertikalen Schwenkachse angeordnet ist. Diese Anordnung erlaubt, dass die gegriffenen Teigstrangenden jeweils um die vertikale Schwenkachse exzentrisch in einer horizontalen Bewegungsebene verschwenkt werden können. Der Schlingkopf 9 ist mittels eines nicht dargestellten Stellantriebs in bzw. gegen die Förderrichtung 23 verfahrbar.

Als weitere Baukomponenteneinheit ist eine automatisierte Vorrichtung zum Führen der Teigstrangschenkel insbesondere während des Schlingvorgangs vorgesehen. Die Vorrichtung umfasst eine Grundplatte 25, einen ersten und einen zweiten Pneumatikzylinder 16, 17, die mit der Zylinderseite an der Grundplatte befestigt sind, ein erstes und ein zweites Hebelsystem 14, 15, welche durch die Pneumatikzylinder 16, 17 angesteuert werden, sowie ein erstes bzw. zweites Führungsteil 1, 2, welche jeweils durch die Hebelsysteme 14, 15 bewegt werden. Die Führungsteile 1, 2 bilden eine Schlingführungseinrichtung.

Die Grundplatte 25 hat in der Draufsicht in Figur 1 einen im wesentlichen rechteckigen Grundquerschnitt und erstreckt sich unterhalb des Förderbands des Zwischentischs 4 derart, dass auf der in Förderrichtung 23 gesehen linken bzw. rechten Seite des Zwischentischs 4 jeweils ein Randabschnitt der Grundplatte 25 übersteht. An den in Förderrichtung 23 hinteren Eckbereichen der Grundplatte 25 sind Vorsprünge vorgesehen, an denen jeweils der erste bzw. der zweite Pneumatikzylinder 16, 17 befestigt ist. Ferner sind jeweils im in Förderrichtung 23 vorderen Eckbereich und im Mittelbereich des Randabschnitts Befestigungsmittel für Dreh- oder Schwenkachsen vorgesehen, so dass auf in der Förderrichtung 23 linken Seite Drehpunkte 18a und 18b und auf der in Förderrichtung 23 rechten Seite Drehpunkte 19a und 19b gebildet sind. An den Drehpunkten 18a, b und 19a, b sind jeweils Hebel 20a, b und 21a, b drehbar gelagert. Die Hebel 20a, b und 21 a, b weisen in der Draufsicht einen gewinkelten, insbesondere L-förmigen Grundquerschnitt auf und sind im Eckbereich drehbar um die entsprechend zugeordneten Drehpunkte 18a, b und 19a, b gelagert. Die Lagerung ist dabei derart ausgebildet, dass die freien Schenkel der Hebel 20a, b und 21a, b sich wie Uhrenzeiger um die entsprechenden Drehpunkte drehen können. Die Hebel 20a, b (in Förderrichtung 23 auf der linken Seite) bzw. die Hebel 21 a, b (in Förderrichtung 23 auf der rechten Seite) sind jeweils über ein Verbindungsblech 26a bzw. 26b mechanisch miteinander gekoppelt. Die Verbindungsbleche 26a, 26b dienen der parallelen Führung der der Führungsteile 1,2.

Auf der linken Seite ist das Verbindungsblech 26a jeweils an einem Endabschnitt eines freien Schenkels der Hebel 20a, b angelenkt. Die jeweils zweiten freien Schenkel der Hebel 20a, b sind in der in Figur 1 dargestellten Position parallel ausgerichtet. Auf der in Förderrichtung 23 rechten Seite ist das Verbindungsblech 26b analog an den Hebeln 21 a, b angelenkt.

Der in Förderrichtung 23 auf jeder Seite erste Hebel 20a bzw. 21a ist an dem freien Schenkel, an dem das Verbindungsblech 26a bzw. 26b angelenkt ist, zusätzlich drehbar mit dem Kolben des ersten Pneumatikzylinders 16 bzw. des zweiten Pneumatikzylinders 17 verbunden. Der Kolben der Pneumatikzylinder 16 bzw. 17 greift dabei zwischen dem Anlenkpunkt des Verbindungsblechs 26a bzw. b und dem Drehpunkt 18a bzw. 19a an.

An den parallel ausgerichteten freien Schenkeln der Hebel 20a, b bzw. 21a, b ist am Endabschnitt jeweils ein Führungsteil 1 bzw. 2 angelenkt. Das Führungsteil 1 bzw. 2 ist als im wesentlichen dreiecksförmige Platte ausgebildet, wobei die sich gegenüberliegenden, aber zueinander zugewandten Seitenflächen der Führungsteile 1 bzw. 2 jeweils eine Führungsbahn 27a bzw. 27b bilden. Die Führungsbahnen 27a bzw. b weisen eine Führungsfläche auf, die im wesentlichen senkrecht zu der durch die Förderriemen bzw. Förderbänder gebildeten Transportebene ausgebildet ist. In der Draufsicht zeigen die Führungsbahnen 27a bzw. b einen Verlauf mit drei Abschnitten, die alle geradlinig ausgebildet sind und einen Öffnungswinkel Alpha, Beta und Gamma gegenüber der Förderrichtung 23 aufweisen, die der nachfolgenden Ungleichung genügen: Alpha > Gamma > Beta. Insbesondere der Winkel Beta kann auch 0 Grad betragen, der Mittelabschnitt kann im wesentlichen parallel zu der Förderrichtung 23 ausgebildet sein.

Die im Anhang dargestellten Figuren 1 bis 5 illustrieren den Vorgang des Brezelschlingens. ausgehend von einem U-förmig gebogenen Teilstrang (Figur 1, 1a) bis zu der fertig geschlungenen Brezel (Figur 5, 5a).

Im nachfolgenden werden zum besseren Verständnis der Erfindung die Verfahrensschritte anhand dieser Figuren beschrieben:

Figur 1 und Figur 1a zeigen in Draufsicht bzw. in Seitenansicht die Brezelschlingvorrichtung 10 in Dehn- und Greifposition. Zuvor wurde ein U-förmiger Teigstrang 6 in die Brezelschlingvorrichtung 10 eingefahren. Wie insbesondere aus Figur 1a ersichtlich ist, liegt der Teigstrangmittelteil auf dem Formteil 3 auf und liegt gleichzeitig an den Haltestiften des zugeschalteten Brezelformwerkzeugs 5 an. Die Teigstrangschenkel erstrecken sich in Förderrichtung 23 über den Zwischentisch 4. Die Teigstrangschenkel liegen jedoch nicht mehr auf dem Zwischentisch 4 auf, da die Teigstrangenden bereits von den Greifeinrichtungen 7 bzw. 8 des Schlingkopfs 9 gegriffen sind und durch eine Vertikalbewegung des Schlingkopfs 9 von dem Zwischentisch 4 abgehoben wurden. Bei der Darstellung in Figur 1 bzw. 1a befindet sich der Schlingkopf bezüglich der Förderrichtung 23 im wesentlichen noch in der Dehnposition.

Die Vorrichtung zum Führen der Teigstrangschenkel befindet sich in einem deaktivierten Zustand: Die Kolben des ersten bzw. des zweiten Pneumatikzylinders 16, 17 sind ausgefahren, befinden sich insbesondere in ihrer Endstellung. Durch das durch Grundplatte 25, Hebel 20a, b bzw. 21a, b und Führungsbleche 26a bzw. b gebildete Hebelsystem sind das erste und zweite Führungsteil 1 bzw. 2 in einem geöffneten Zustand gehalten.

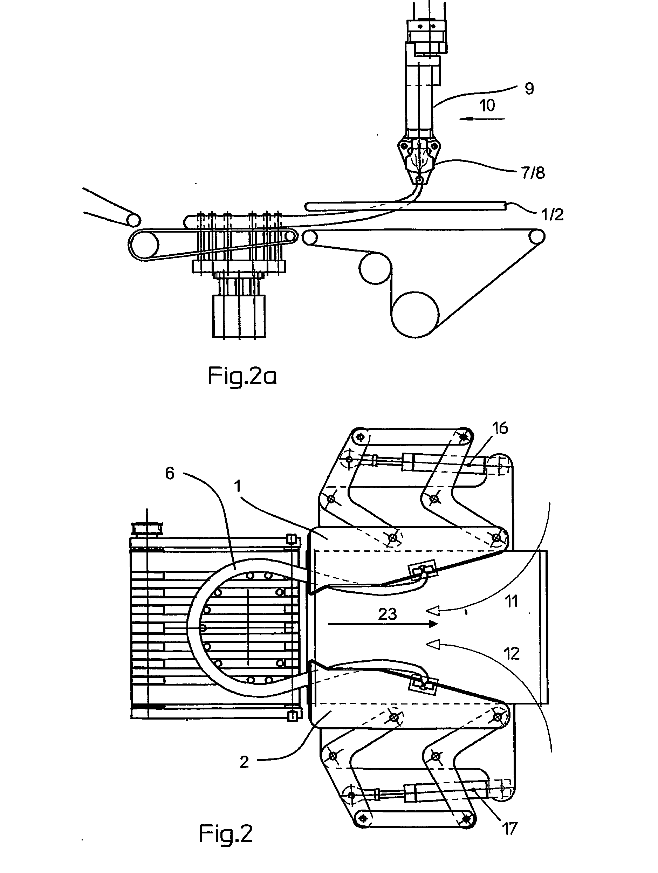

Die Figuren 2 und 2a zeigen in Draufsicht bzw. in Seitenansicht die Brezelschlingvorrichtung 10, wobei sich der Schlingkopf 9 entgegen der Dehnposition wie in Figuren 1 bzw. 1a bewegt, der erste und der zweite Pneumatikzylinder 16 bzw. 17 jedoch aktiviert sind, insbesondere teilweise eingefahren sind. Durch das Einfahren der Pneumatikzylinder 16 bzw. 17 werden das erste und das zweite Führungsteil 1 bzw. 2 in einer halbkreisförmigen Bewegungsbahn 11 bzw. 12 zueinander und gleichzeitig in Richtung des Brezelformwerkzeugs 5 geschwenkt. Während dieser Schwenkbewegung sind die Führungsteile 1, 2 parallel zueinander angeordnet.

Weil die freien Schenkel der Hebel 20a, b bzw. 21a, b, die an das erste bzw. zweite Führungsteil 1 bzw. 2 angelenkt sind, in der Ausgangslage in den Figuren 1 und 1a im wesentlichen parallel zur Förderrichtung 23 ausgerichtet sind, erfolgt durch das Einziehen der Kolben in den ersten bzw. zweiten Pneumatikzylinder 16, 17 in der Anfangsphase hauptsächlich eine Bewegung der Führungsteile 1, 2 quer zur Förderrichtung 23. In der Anfangsphase ist die Bewegungsgeschwindigkeit der Führungsteile 1, 2 in Förderrichtung 23 kleiner als die Bewegungsgeschwindigkeit quer zur Förderrichtung 23.

Durch das Zusammenfahren der Führungsteile 1 und 2 kommen die Teigstrangschenkel des Teigstrangs 6 in Anlage mit dem mittleren Bereich der Führungsbahnen 27a, b der Führungsteile 1, 2. Zudem werden die Greifeinrichtungen 7, 8 um mehr als 90° um die zugeordnete vertikale Schwenkachse geschwenkt. Hierdurch wird der ursprünglich U-förmige Teigstrang 6 in die Form eines Omega gebracht wie in der Draufsicht in Figur 2 zu erkennen ist.

Die Figuren 3 und 3a zeigen in Draufsicht bzw. Seitenansicht die Brezelschlingvorrichtung 10 während des eigentlichen Schlingvorgangs. Der Schlingkopf 9 ist von einer Dehnposition gegen die Förderrichtung 23 in Richtung des Formwerkzeugs in eine Schlingposition gefahren, was durch einen waagrechten Pfeil am oberen Figurenrand illustriert wird, und wurde um 90 Grad um eine vertikale Drehachse gedreht. Die Kolben des ersten bzw. des zweiten Pneumatikzylinders 16, 17 sind weiter eingefahren als in den Figuren 2, 2a. Die jeweils freien Schenkel der Hebel 20a, b und 21a, b, die an den Führungsteilen 1, 2 angelenkt sind, nehmen bezüglich einer Geraden in Förderrichtung 23 in Draufsicht einen Winkel von ungefähr 45 Grad ein. Die Drehbewegung und die Verfahrbewegung des Schlingkopfs 9 sowie das Einfahren der Kolben der Pneumatikzylinder 16, 17 und somit die Bewegung der Führungsteile 1, 2 erfolgen simultan.

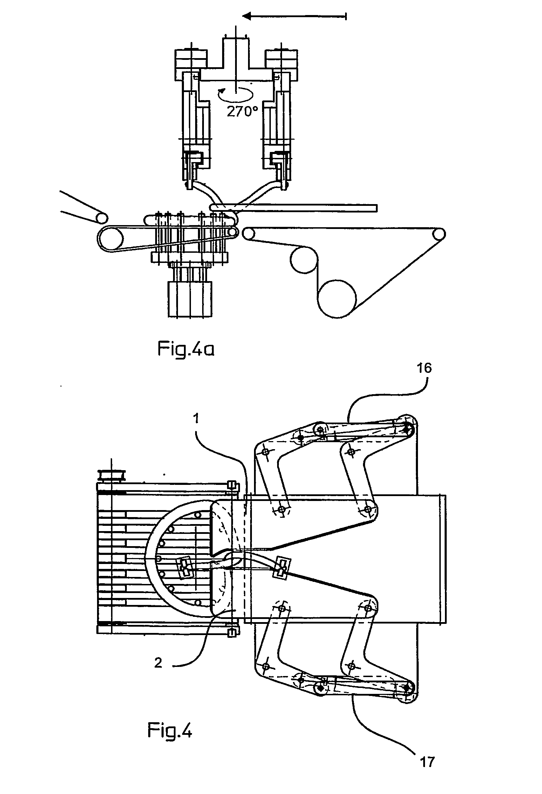

Die Figuren 4 und 4a zeigen in Draufsicht bzw. in Seitenansicht die Brezelschlingvorrichtung 10, wobei der Schlingkopf 9 während des Schlingens im Vergleich zur Figur 3 weiter gegen die Förderrichtung 23 auf das Brezelformwerkzeug 5 zugefahren ist, was durch einen Pfeil am oberen Bildrand symbolisiert ist. Der Schlingkopf 9 ist gegenüber seiner Ausgangslage in den Figuren 1, 1a um 270 Grad um eine vertikale Drehachse verdreht. Die Kolben des ersten und des zweiten Pneumatikzylinders 16, 17 sind vollständig eingefahren, so dass - bedingt durch das Hebelsystem - die Führungsteile 1 und 2 einen minimalen Abstand zueinander einnehmen. In dieser Verfahrensphase nehmen die freien Schenkel der Hebel 20a, b bzw. 21a, b, an denen die Führungsteile 1, 2 angelenkt sind, einen Winkel von nahezu 90° gegenüber einer Geraden in Förderrichtung 23 ein. Die Bewegungsgeschwindigkeit der Führungsteile 1, 2 entgegen der, insbesondere antiparallel zur Förderrichtung 23 ist größer als deren Bewegungsgeschwindigkeit quer zur Förderrichtung 23. Nachdem der Schlingkopf 9 eine Drehung von ca. 180 bis 270 Grad durchgeführt hat, werden die Führungsteile 1 und 2 entgegen der Schwenkrichtung 11, 12 in die in Figuren 1, 1a gezeigte Grundstellung durch Ausfahren der Kolben aus dem ersten bzw. zweiten Pneumatikzylinder 16, 17 zurückgefahren.

Insbesondere aus Fig.4 und 4a ist auch der Erfindungsvorteil erkennbar, dass aufgrund der dichten Lage der Führungsteile 1,2 über einen dem Zwischentisch 4 nächstliegenden Teil der Haltestifte des Formtischs 3 verhindert wird, dass der Teigstrang 6 während des Schlingvorganges über die Haltestifte gezogen und so unzulässig vom Formtisch 3 gelöst wird.

Die Figuren 5 und 5a zeigen in Draufsicht bzw. Seitenansicht den Schlingkopf 9 in Ablageposition, d. h. in etwa oberhalb des Formwerkszeugs 3, so dass die Teigstrangenden auf den auf dem Formtisch 3 liegenden Teigstrangmittelteil aufgedrückt werden können. Die Führungsteile 1, 2 sind durch Ausfahren der Pneumatikzylinder 16, 17 in ihre geöffnete Ausgangslage wie in Figur 1 gefahren worden.

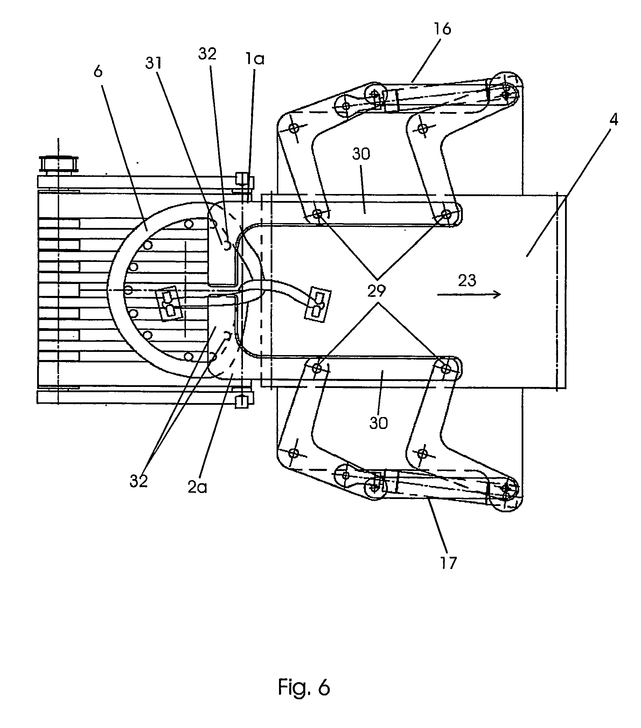

Gemäß Figur 6 sind bei der erfindungsgemäßen Schlingvorrichtung abgewandelte Führungsteile 1 a, 2a an das jeweilige Hebelsystem 14, 15 über jeweils zwei Gelenkstellen 29 angebracht. Die beiden abgewandelten Führungsteile 1 a, 2a besitzen jeweils eine L-artige Grundform, wobei bei eingefahrenen Pneumatikzylindern 16, 17 die jeweils längeren L-Schenkel 30, welche von den in Längsrichtung hintereinander angeordneten Gelenkstellen 29 durchsetzt sind, zueinander parallel liegen bzw. weitgehend parallel zur Förderrichtung 23 verlaufen. Die kürzeren L-Schenkel 31 beider Führungsteile 1 a, 2a erstrecken sich über den Randbereich des Formtisches 3 bzw. des Brezelformwerkzeugs 5, der dem Zwischentisch 4 am nächsten liegt. Dabei überdecken sie auch diejenigen Haltestifte 32, die sich in dem genanten Randbereich befinden. Der Abstand der Unterseite der L-Führungsteile 1a, 2a zu den oberen Stirnseiten der genannten Haltestifte 32 ist derart gering, dass durch den gebildeten Spalt ein Teigstrang 6 nicht hindurchgleiten kann. Infolgedessen ist während des Schlingvorgangs der Teigstrang 6 daran gehindert, sich von den Haltestiften 32 im genannten Randbereich und damit auch von den sonstigen Haltestiften zu lösen. Eine zusätzliche Knoten-Schling-Führung wie nach Fig. 1 - 5 findet aber bei dieser Ausführung nicht statt. Diese Ausführungsvariante ist aber vorteilhaft zum Schlingen von Teigsträngen, die aufgrund ihrer Teigkonsistenz keiner Spannung ausgesetzt werden dürfen. Bei derartigen Teigsträngen ist dafür Sorge zu tragen, dass lediglich ein Niederhalten des Teigstrangs an den Haltestiften stattfindet. Dies gilt vor allem bei der Herstellung geschlungener Blätterteigprodukte, wo der entsprechende Teigstrang keiner Spannung ausgesetzt werden soll.

Ein weiterer, mit der Erfindung erzielbarer Vorteil besteht darin, dass bei entsprechend ausgeführten Gelenkstellen 29 sich die Führungsteile 1, 2 gemäß Figuren 1-5 leicht durch die L-artigen Führungsteile 1a, 2a austauschen lassen, wenn eine entsprechende Anforderung vorliegt. Zur Realisierung solcher Gelenkstellen eignen sich beispielsweise Steckverbindungen, bei denen Zentrierbolzen der Führungsteile 1,2,1a,2a drehbar im jeweiligen Hebelgestänge verblieben sind. Es lässt sich so das Teigstrangführungswerkzeug von der mechanischen Bewegungssteuerung, insbesondere dem entsprechenden Hebelsystem 14, 15, leicht lösen und wieder neu anbringen, was die Einsatzflexibilität erhöht.

### Bezugszeichenliste:

- 1, 2: Führungsteil
- 1a, 2a: Führungsteil
- 3: Formtisch
- 4: Zwischentisch
- 5: Brezelformwerkzeug
- 6: Teigstrang
- 7,8: Greifeinrichtung
- 9: Schlingkopf
- 10: Brezelschlingvorrichtung
- 11: Zustellbewegungsrichtung
- 12: Zustellbewegungsrichtung
- 14: erstes Hebelsystem
- 15: zweites Hebelsystem
- 16: erster Pneumatikzylinder
- 17: zweiter Pneumatikzylinder
- 18a,b: Drehpunkte
- 19a,b: Drehpunkte
- 20a,b: Hebel
- 21a,b: Hebel
- 22: Brezel
- 23: Förderrichtung
- 24: Hubzylinder
- 25: Grundplatte
- 26a,b: Verbindungsblech oder -element
- 27a,b: Führungsbahn
- 28: Joch
- 29: Gelenkstellen
- 30: längerer L-Schenkel
- 31: kürzerer L-Schenkel
- 32: Haltestifte

## Patentansprüche

1. Verfahren zur Herstellung von geschlungenen Teigrohlingen aus Teigsträngen (6), insbesondere von Brezelrohlingen,
wobei ein Teigstrang (6) an den Teigstrangenden von einem Schlingkopf (9) aufgenommen wird,
wobei Teigstrangschenkel des Teigstrangs (6) miteinander verschlungen werden und die Teigstrangschenkel während des Schlingens mittels einer Schlingführungseinrichtung (1,2,1a,2a) geführt werden,
**dadurch gekennzeichnet, dass**
die Schlingführungseinrichtung (1,2,1a,2a) mit dem Schlingkopf (9) mitlaufend verfahren wird,
wobei die Schlingführungseinrichtung (1,2,1a,2a) unmittelbar nach Aufnahme der Teigstrangenden durch den Schlingkopf (9) und/oder einem Dehnen des Teigstrangs (6) mit dem Schlingkopf (9) entgegen einer Teigstrang-Förderrichtung (23) bewegt wird.

2. Verfahren nach Anspruch 1, **dadurch gekennzeichnet, dass** im Rahmen des mitlaufenden Verfahrens die Schlingführungseinrichtung (1,2,1a,2a) dem Schlingkopf (9) nachgeführt wird.

3. Verfahren nach einem der vorangehenden Ansprüche, **dadurch gekennzeichnet, dass** die Schlingführungseinrichtung (1,2,1a,2a) während der mitlaufenden Verfahrbewegung in Richtung Teigstrangmittelteil des Teigstrangs (6) verfahren wird.

4. Verfahren nach einem der vorangehenden Ansprüche, **dadurch gekennzeichnet, dass** die Schlingführungseinrichtung (1,2,1a,2a) zugeschaltet wird, indem mindestens zwei gegenüberliegende Führungsteile (1,2,1a,2a) der Schlingführungseinrichtung (1,2,1a,2a) im wesentlichen quer zu einer Förderrichtung (23) des Teigstrangs (6) bzw. des Teigrohlings bewegt werden, um gemeinsam eine oder mehrere Führungsflächen (27a,b) oder - bahnen für die Teigstrangschenkel zu bilden.

5. Verfahren nach einem der vorangehenden Ansprüche, **dadurch gekennzeichnet, dass** die mitlaufende Verfahrbewegung der Schlingführungseinrichtung (1,2,1a,2a) und/oder gegebenenfalls die Zuschaltung der Schlingführungseinrichtung (1,2,1a,2a) und/oder der Schlingschritt als überlagerte Bewegungen ausgeführt werden.

6. Verfahren nach einem der vorangehenden Ansprüche, **dadurch gekennzeichnet, dass** die Führungsteile (1,2,1a,2a) während einer überlagerten Bewegung von mitlaufender Verfahrbewegung der Schlingführungseinrichtung (1,2,1a,2a) und Zuschaltung der Schlingführungseinrichtung (1,2,1a,2a) in einer halbkreisförmigen Bahn geführt, insbesondere mechanisch zwangsgeführt, werden.

7. Verfahren nach einem der vorangehenden Ansprüche, **dadurch gekennzeichnet, dass** die Teigstrangschenkel durch die Schlingführungseinrichtung (1,2,1a,2a) seitlich geführt werden.

8. Verfahren nach einem der vorhergehenden Ansprüche, **dadurch gekennzeichnet, dass** die Schlingführungseinrichtung (1,2,1a,2a) eine oder mehrere Führungsflächen aufweist und dass die Teigstrangschenkel durch die eine oder mehrere Führungsflächen (2a,27b) geführt werden, wobei die Führungsflächen parallel oder im wesentlichen parallel zur Längserstreckung der Teigstrangschenkel und als eine oder mehrere Führungsbahnen eingesetzt werden.

9. Verfahren nach einem der vorangehenden Ansprüche, **dadurch gekennzeichnet, dass** eine Schlingführungseinrichtung (1,2,1a,2a) nach einem der nachfolgenden Ansprüche verwendet wird.

10. Vorrichtung zur maschinellen Herstellung von geschlungenen Teigwaren, insbesondere Brezeln (22), aus einem Teigstrang (6), vorzugsweise zur Durchführung des Verfahrens nach einem der vorangehenden Ansprüche, mit einem Formtisch (3), der ein Formwerkzeug (5) zur Aufnahme des Teigstrangmittelteils des Teigstrangs aufweist,
mit einem Schlingkopf (9) zum Ergreifen der Teigstrangenden des Teigstrangs und zum Verschlingen der Teigstrangschenkel des Teigstrangs,
mit einer Schlingführungseinrichtung (1,2,1a,2a) mit Führungsflächen oder -wandungen (27a,b), welche gemeinsam die Teigstrangschenkel während des Verschlingens führen,
wobei die Führungsflächen oder -wandungen (27a,b) durch eine Bewegungssteuerung mit einer gleichorientierten Bewegung in Richtung zum Formwerkzeug (5) verfahrbar und geführt sind,
**dadurch gekennzeichnet, dass**
die Bewegungssteuerung derart ausgebildet ist, dass die Schlingführungseinrichtung (1,2,1a,2a) mit ihren Führungsflächen oder - wandungen (27a,27b) mit dem Schlingkopf (9) mitlaufend verfahren wird und der Schlingführungseinrichtung (1,2,1a,2a) mit ihren Führungsflächen oder wandungen (27a,27b) eine Bewegung oder wenigstens eine Bewegungskomponente entgegen und/oder antiparallel zu einer vom Formtisch (3) für den Teigstrang (6) erzeugten Förderbewegung (23) eingeprägt wird.

11. Vorrichtung nach Anspruch 10, **dadurch gekennzeichnet, dass** der Bewegungsablauf der Führungsflächen oder -wandungen im Rahmen einer Antriebssteuerung automatisiert und/oder mit den Bewegungen des Schlingkopfes koordiniert sind.

12. Vorrichtung nach einem der vorangehenden Ansprüche, **dadurch gekennzeichnet, dass** die Schlingführungseinrichtung mindestens zwei gegenüberliegende Führungsteile (1.2.1a.2a) mit den Führungsflächen oder -wandungen (27a,b) aufweist.

13. Vorrichtung nach Anspruch 12, **dadurch gekennzeichnet, dass** die Führungsteile (1,2,1a,2a) in einer vorzugsweise horizontalen Ebene in Richtung zum Formwerkzeug (5) und in senkrechter Richtung dazu verfahrbar sind.

14. Vorrichtung nach Anspruch 12 oder 13, **dadurch gekennzeichnet, dass** die Bewegungen der Führungsteile (1,2,1a,2a) in Richtung Formwerkzeug (5) und in senkrechter Richtung dazu mechanisch und/oder steuerungstechnisch gekoppelt sind.

15. Vorrichtung nach einem der Ansprüche 12 bis 14, **dadurch gekennzeichnet, dass** die mindestens zwei Führungsteile (1,2,1a,2a) jeweils in einer halbkreisförmigen Bewegung schwenkbar sind.

16. Vorrichtung nach einem der Ansprüche 12 bis 15, **dadurch gekennzeichnet, dass** die Bewegungssteuerung als Hebelsystem (14, 15) realisiert ist, und die Führungsteile (1,2,1a,2a) zu ihrer Bewegung und Führung mit dem Hebelsystem (14, 15) gekoppelt sind.

17. Vorrichtung nach Anspruch 16, **dadurch gekennzeichnet, dass** das Hebelsystem (14, 15) mittels mindestens eines Druckzylinders, insbesondere mindestens eines Pneumatikzylinders (16,17), und/oder mittels eines Motors antreibbar ist.

18. Vorrichtung nach einem der vorangehenden Ansprüche, **dadurch gekennzeichnet, dass** die Schlingbewegung und/oder die Verfahrbewegung des Schlingkopfs (9) mit der Bewegung der Führungsflächen oder-wandungen (27a,27b) synchronisiert ist.

19. Vorrichtung nach Anspruch 18, **dadurch gekennzeichnet, dass** zur Synchronisation die Verfahrbewegung des Schlingkopfs (9) mit der Bewegung der Führungsflächen oder -wandungen (27a,27b) mechanisch und/oder steuerungstechnisch gekoppelt ist.

## Claims

1. A method for producing knotted dough preforms from dough strands (6), in particular pretzel preforms,
a dough strand (6) being held at the ends of the dough strand by a knotting head (9),
dough strand limbs of the dough strand (6) being knotted together, and the dough strand limbs being guided by a knotting guide device (1, 2, 1a, 2a) during the knotting process,
**characterised in that**
the knotting guide device (1, 2, 1a, 2a) is driven concurrently with the knotting head (9),
the knotting guide device (1, 2, 1 a, 2a) being moved in a direction opposing a dough strand conveyance direction (23) directly after the ends of the dough strand have been received by the knotting head (9) and/or stretching the dough strand (6) with the knotting head (9).

2. The method according to Claim 1, **characterised in that** within the framework of the concurrent method the knotting guide device (1, 2, 1a, 2a) is guided such as to follow the knotting head (9).

3. The method according to any of the preceding claims, **characterised in that** the knotting guide device (1, 2, 1 a, 2a) is moved towards the dough strand middle section of the dough strand (6) during the concurrent displacement movement.

4. The method according to any of the preceding claims, **characterised in that** the knotting guide device (1, 2, 1a, 2a) is switched on by at least two opposing guide parts (1, 2, 1 a, 2a) of the knotting guide device (1, 2, 1a, 2a) being moved substantially transversely to a direction of conveyance (23) of the dough strand (6) or the dough preform in order to form together one or more guide surfaces (27a, b) or tracks for the dough strand limbs.

5. The method according to any of the preceding claims, **characterised in that** the concurrent displacement movement of the knotting guide device (1, 2, 1a, 2a) and/or optionally the switching on of the knotting guide device (1, 2, 1a, 2a) and/or the knotting step are implemented as superimposed movements.

6. The method according to any of the preceding claims, **characterised in that** the guide parts (1, 2, 1 a, 2a) are guided, in particular mechanically forcibly guided, over a semi-circular track during a superimposed movement of concurrent displacement movement of the knotting guide device (1, 2, 1a, 2a) and switching on of the knotting guide device (1, 2, 1 a, 2a).

7. The method according to any of the preceding claims, **characterised in that** the dough strand limbs are guided to the side by the knotting guide device (1, 2, 1a, 2a).

8. The method according to any of the preceding claims, **characterised in that** the knotting guide device (1, 2, 1a, 2a) has one or more guide surfaces, and that the dough strand limbs are guided by the one or more guide surfaces (2a, 27b), the guide surfaces being used parallel or substantially parallel to the longitudinal extension of the dough strand limbs and as one or more guide tracks.

9. The method according to any of the preceding claims, **characterised in that** a knotting guide device (1, 2, 1a, 2a) according to any of the following claims is used.

10. An apparatus for the mechanical production of knotted dough items, in particular pretzels (22), from a dough strand (6), preferably for implementing the method according to any of the preceding claims, comprising a shaping table (3) which has a shaping tool (5) for holding the dough strand middle part of the dough strand,
comprising a knotting head (9) for gripping the dough strand ends of the dough strand and for knotting the dough strand limbs of the dough strand,
comprising a knotting guide device (1, 2, 1a, 2a) with guide surfaces or walls (27a, b) which together guide the dough strand limbs during the knotting process,
the guide surfaces or walls (27a, b) being displaceable and guided by a movement control with an identically orientated movement towards the shaping tool (5),
**characterised in that**
the movement control is formed such that the knotting guide device (1, 2, 1 a, 2a) with its guide surfaces or walls (27a, 27b) is moved concurrently with the knotting head (9), and the knotting guide device (1, 2, 1a, 2a) with its guide surfaces or walls (27a, 27b) is imprinted with a movement or at least a movement component opposing and/or anti-parallel to a conveyance movement (23) generated by the shaping table (3) for the dough strand (6).

11. The apparatus according to Claim 10, **characterised in that** the sequence of movements of the guide surfaces or walls within the framework of drive control is automated and/or coordinated with the movements of the knotting head.

12. The apparatus according to any of the preceding claims, **characterised in that** the knotting guide device has at least two opposing guide parts (1, 2, 1 a, 2a) with the guide surfaces or walls (27a, b).

13. The apparatus according to Claim 12, **characterised in that** the guide parts (1, 2, 1a, 2a) can be displaced in a preferably horizontal plane towards the shaping tool (5) and in the direction perpendicular to the latter.

14. The apparatus according to Claim 12 or 13, **characterised in that** the movements of the guide parts (1, 2, 1a, 2a) towards the shaping tool (5) and in the direction perpendicular to the latter are coupled mechanically and/or for control purposes to said shaping tool

15. The apparatus according to any of Claims 12 to 14, **characterised in that** the at least two guide parts (1, 2, 1a, 2a) are respectively pivotable in a semi-circular movement

16. The apparatus according to any of Claims 12 to 15, **characterised in that** the movement control is in the form of a lever system (14, 15), and the guide parts (1, 2, 1a, 2a) are coupled for their movement and guiding to the lever system (14, 15).

17. The apparatus according to Claim 16, **characterised in that** the lever system (14, 15) can be driven by means of at least one pressure cylinder, in particular at least one pneumatic cylinder (16, 17) and/or by means of a motor.

18. The apparatus according to any of the preceding claims, **characterised in that** the knotting movement and/or the displacement movement of the knotting head (9) is synchronised with the movement of the guide surfaces or walls (27a, 27b).

19. The apparatus according to Claim 18, **characterised in that** for synchronisation the displacement movement of the knotting head (9) is coupled mechanically and/or for control purposes to the movement of the guide surfaces or walls (27a, 27b).

## Revendications

1. Procédé de fabrication d'ébauches de pâte enroulées à partir de boudins de pâte (6), en particulier d'ébauches de bretzel,
dans lequel un boudin de pâte (6) est soulevé à ses
extrémités par une tête d'enroulement (9),
dans lequel les branches du boudin de pâte (6) sont
entrelacées l'une avec l'autre et sont guidées pendant l'enroulement au moyen d'un dispositif de guidage d'enroulement (1,2,1a,2a),
**caractérisé en ce que**
le dispositif de guidage d'enroulement (1,2,1a,2a) est déplacé en tournant avec la tête d'enroulement (9),
dans lequel le dispositif de guidage d'enroulement (1,2,1a,2a) est déplacé juste après le soulèvement des extrémités du boudin de pâte par la tête d'enroulement (9) et/ou après un allongement du boudin de pâte (6) avec la tête d'enroulement (9) à l'encontre du sens de transport (23) du boudin de pâte.

2. Procédé selon la revendication 1, **caractérisé en ce que**, dans le cadre du déplacement rotatif, le dispositif de guidage d'enroulement (1,2,1a,2a) est asservi à la tête d'enroulement (9).

3. Procédé selon l'une quelconque des revendications précédentes, **caractérisé en ce que** le dispositif de guidage d'enroulement (1,2,1a,2a) est déplacé pendant le mouvement de déplacement rotatif en direction de la partie centrale du boudin de pâte (6).

4. Procédé selon l'une quelconque des revendications précédentes, **caractérisé en ce que** le dispositif de guidage d'enroulement (1,2,1a,2a) est mis en circuit en déplaçant au moins deux parties de guidage opposées (1,2,1a,2a) du dispositif de guidage d'enroulement (1,2,1a,2a) sensiblement transversalement à une direction de transport (23) du boudin de pâte (6) ou de l'ébauche de pâte pour former conjointement une ou plusieurs surfaces (27a,b) ou voies de guidage pour les branches du boudin de pâte.

5. Procédé selon l'une quelconque des revendications précédentes, **caractérisé en ce que** le mouvement de déplacement rotatif du dispositif de guidage d'enroulement (1,2,1a,2a) et/ou éventuellement la mise en circuit du dispositif de guidage d'enroulement (1,2,1a,2a) et/ou l'étape d'enroulement sont effectués sous la forme de mouvements superposés.

6. Procédé selon l'une quelconque des revendications précédentes, **caractérisé en ce que** les parties de guidage (1,2,1a,2a) sont, pendant un mouvement superposé du déplacement rotatif du dispositif de guidage d'enroulement (1,2,1a,2a) et de la mise en circuit du dispositif de guidage d'enroulement (1,2,1a,2a), guidées, en particulier guidées par contrainte mécanique, dans une voie semi-circulaire.

7. Procédé selon l'une quelconque des revendications précédentes, **caractérisé en ce que** les branches du boudin de pâte sont guidées latéralement par le dispositif de guidage d'enroulement (1,2,1a,2a).

8. Procédé selon l'une quelconque des revendications précédentes, **caractérisé en ce que** le dispositif de guidage d'enroulement (1,2,1a,2a) présente une surface de guidage ou plus et **en ce que** les branches du boudin de pâte sont guidées par la surface de guidage (2a,27b) ou plus, dans lequel les surfaces de guidage sont insérées parallèlement ou sensiblement parallèlement à l'extension longitudinale des branches du boudin de pâte et sous la forme d'une voie de guidage ou plus.

9. Procédé selon l'une quelconque des revendications précédentes, **caractérisé en ce que** l'on utilise un dispositif de guidage d'enroulement (1,2,1a,2a) selon l'une quelconque des revendications précédentes.

10. Dispositif pour fabriquer mécaniquement des pâtes alimentaires enroulées, en particulier des bretzels (22), à partir d'un boudin de pâte (6), de préférence pour réaliser le procédé selon l'une quelconque des revendications précédentes, comprenant une table de formage (3), qui présente un outil de formage (5) pour recevoir la partie centrale du boudin de pâte, comprenant
une tête d'enroulement (9) pour saisir les extrémités du boudin de pâte et entrelacer les branches du boudin de pâte,
un dispositif de guidage d'enroulement (1,2,1a,2a) avec des surfaces ou des parois de guidage (27a,b), qui guident conjointement les branches du boudin de pâte pendant l'entrelacement,
dans lequel les surfaces ou parois de guidage (27a,b) sont déplaçables et guidées par une commande de mouvement avec un mouvement de même orientation en direction de l'outil de formage (5),
**caractérisé en ce que**
la commande de mouvement est assurée de sorte que le dispositif de guidage d'enroulement (1,2,1a,2a) avec ses surfaces ou parois de guidage (27a,27b) soit déplacé en tournant avec la tête d'enroulement (9) et qu'un mouvement ou au moins une composante de mouvement soit appliqué au dispositif de guidage d'enroulement (1,2,1a,2a) avec ses surfaces ou parois de guidage (27a,27b) à l'encontre et/ou antiparallèlement à un mouvement de transport (23) généré par la table de formage (3) pour le boudin de pâte (6).

11. Dispositif selon la revendication 10, **caractérisé en ce que** la courbe de mouvement des surfaces ou parois de guidage est automatisée dans le cadre d'une commande d'entraînement et/ou coordonnée avec les mouvements de la tête d'enroulement.

12. Dispositif selon l'une quelconque des revendications précédentes, **caractérisé en ce que** le dispositif de guidage d'enroulement présente au moins deux parties de guidage opposées (1,2,1a,2a) avec les surfaces ou parois de guidage (27a,b).

13. Dispositif selon la revendication 12, **caractérisé en ce que** les parties de guidage (1,2,1a,2a) sont déplaçables dans un plan de préférence horizontal en direction de l'outil de formage (5) et dans une direction perpendiculaire à celle-ci.

14. Dispositif selon la revendication 12 ou 13, **caractérisé en ce que** les mouvements des parties de guidage (1,2,1a,2a) en direction de l'outil de formage (5) et dans une direction perpendiculaire à celle-ci sont couplés mécaniquement et/ou par une technique de commande.

15. Dispositif selon l'une quelconque des revendications 12 à 14, **caractérisé en ce que** les au moins deux parties de guidage (1,2,1a,2a) peuvent pivoter respectivement dans un mouvement semi-circulaire.

16. Dispositif selon l'une quelconque des revendications 12 à 15, **caractérisé en ce que** la commande de mouvement se présente sous la forme d'un système de leviers (14, 15) et **en ce que** les parties de guidage (1,2,1a,2a) sont couplées au système de leviers (14, 15) pour leur mouvement et leur guidage.

17. Dispositif selon la revendication 16, **caractérisé en ce que** le système de leviers (14, 15) peut être entraîné au moyen d'au moins un cylindre de pression, en particulier d'au moins un cylindre pneumatique (16,17) et/ou au moyen d'un moteur.

18. Dispositif selon l'une quelconque des revendications précédentes, **caractérisé en ce que** le mouvement d'enroulement et/ou le mouvement de déplacement de la tête d'enroulement (9) est ou sont synchronisés avec le mouvement des surfaces ou parois de guidage (27a,27b).

19. Dispositif selon la revendication 18, **caractérisé en ce que**, pour assurer une synchronisation, le mouvement de déplacement de la tête d'enroulement (9) est couplé mécaniquement et/ou par une technique de commande au mouvement des surfaces ou parois de guidage (27a,27b).
